**Europäisches Patentamt**

**European Patent Office**

**Office européen des brevets**

(11) Publication number : **0 506 621 A2**

# (12) EUROPEAN PATENT APPLICATION

(21) Application number : **92830105.0**

(22) Date of filing : **06.03.92**

(51) Int. Cl.⁵ : **B27C 3/00,** G01B 5/00

(30) Priority : **08.03.91 IT BO910064**

(43) Date of publication of application :
**30.09.92 Bulletin 92/40**

(84) Designated Contracting States :
**DE ES FR GB IT**

(71) Applicant : **MORBIDELLI S.p.A.**
**Via Fermo, 33**
**I-61100 Pesaro (IT)**

(72) Inventor : **Morbidelli, Giancarlo**
**Strada Panoramica, 194**
**I-61100 Pesaro (IT)**

(74) Representative : **Lanzoni, Luciano**
**c/o BUGNION S.p.A. Via dei Mille, 19**
**I-40121 Bologna (IT)**

(54) **A system for measuring, monitoring and comparing the dimensions of panels, suitable in particular for integration into woodworking lines.**

(57)   The system comprises an intermediate station (5) located in line with and preceding a borer (3), consisting in a deck (6) that occupies a common plane with the path followed by the panels (1) and affords a pair of vertical stops (7, 8) serving to arrest the panel as well as functioning as a datum for its measurement on two axes (X, Y), by means of a plurality of contact sensors (9) ; each of the sensors generates an output signal reflecting an effective value (Vr), as measured, for comparison by a central processing unit (10) with previously entered standard reference values (Vt) adopted for machining purposes, in such a way as to permit of repositioning the tool heads (4) of the borer (3) automatically in the event of a difference emerging between the measured values (Vr) and the reference values (Vt).

FIG1

EP 0 506 621 A2

The invention relates to a system for measuring, monitoring and comparing the dimensions of wood panels, intended in particular for integration into woodworking lines engaged in the manufacture of such panels.

Typically, one of the most important work stations in a woodworking line for the production of panels, and especially panels destined to become components of furniture, is a borer installed and operating substantially at the end of the line.

Such a machine consists generally in a horizontal conveying surface onto which the panel is directed from a previous station (e.g. a combination and edge-banding unit by which the panel is finished), and a number of vertical and horizontal spindle heads, slides and hold-down clamps, all of which disposed along the feed direction of the machine.

To ensure that holes are sunk correctly in all the panels of a given batch, the machine is set up in advance by moving the different spindle heads (of which the drill bits are chucked by hand), slides and hold-down clamps to the appropriate positions; certain of these operations are effected manually, whilst others are implemented with the aid of a numerical control unit.

Currently, this setup operation tends to take an inordinately long time in compaarison with the standard times typical of other machinery in panel production lines, since the initial settings are selected employing nominal parameters, and only after the borer has commenced operating does it become possible to ascertain whether or not the positioning of all the devices is correct.

In practice, after setting up, the operator will make a trial run on a number of panels (generally ten or so), then check for any machining errors, calculate their mean value and proceed finally to correct the positioning of the various devices as may be appropriate so that machining operations on the new batch will be faultless.

The corrections in question are necessitated mainly by dimensional inaccuracies in the incoming panel, for example thickness of the glue, which is always liable to vary between one panel and another, or tensional stresses in the wood (hence variations in profile) resulting from the enforced passage of the panel from one station of the line to the next. The one possibility available hitherto of bringing about a reduction in the time taken to correct a toolage setup is that of offering the single panels to special measurement tables or patterns remote from the line, which permit of establishing the exact dimensions of the panel. Such an expedient involves removing the panel from the line, however, and therefore shutting off the equipment, so that even when the various devices of the borer have been correctly repositioned, there is an element of down time that cannot be recovered.

The object of the present invention is to overcome the drawbacks mentioned above through the adoption of a system for measuring, monitoring and comparing the dimensions of wood panels, integrated into the woodworking line by which the panels are produced and capable of effecting a swift verification of the effective dimensions of each single incoming panel in such a way as to adapt and "dedicate" a successive machining operation on the panel.

The stated object is realized in the provision of a system as characterized in the appended claims, based on the inclusion of an intermediate station located preceding a work station at which holes are bored in the panels and consisting in a surface, occupying the same plane as that of the path along which the panels are conveyed through the line, affording a pair of vertical stops against which successive panels are caused to locate and from which the dimensions of each panel are measured through two axes by means of a plurality of contact sensors; each sensor is capable of generating an output signal indicative of an effective value, as measured, for comparison by a central processing unit with previously entered standard reference values adopted for machining purposes, to the end that a correction of the tool units of the boring station can be piloted automatically in the event that measured values and reference values are found to be at variance.

The invention will now be described in detail, by way of example, with the aid of the accompanying drawings, in which:

– fig 1 illustrates the system according to the invention, in a block diagram;

– fig 2 is a schematic representation of the system of fig 1, viewed in plan from above, imported into a woodworking line for the production of panels.

Referring to the drawings, the system disclosed is integrated into a woodworking line dedicated to the production of panels 1, comprising at least one station 2 by which the panels are either subjected to a machining operation or simply conveyed (in the example illustrated, a combination end-machining and edge-banding unit is assumed), and thereafter, a boring station 3 equipped with a plurality of adjustable tool units 4 disposed along the path followed by the panels (for example, drill spindle heads, hold-down clamps, slides etc., which are illustrated schematically, being conventional in embodiment).

Notwithstanding the woodworking line will include other stations besides, the description is limited to this particular section by reason of its special pertinence to the system in question.

The two work stations 2 and 3 will be seen in both drawings to lie on either side of an intermediate station 5, by which the single panel 1 is measured; the station 5 in question comprises a deck 6 lying in a common plane with the path followed by the panels 1, of which the active surface (that is, the surface over which the panels are conveyed) affords a pair of fixed reference elements denoted 7 and 8 respectively, functioning also as vertical detents against which one corner of each successive panel is caused to locate.

Thus, the measuring station 5 consists in practice of a horizontal table, and the reference elements 7 and 8 can be embodied simply as a pair of vertical stops disposed at right angles to one another and located to coincide with the points of origin from which machining commences at the boring station 3. Accordingly, the stops 7 and 8 provide a datum on cartesian axes X and Y for a plurality of contact sensors 9 distributed uniformly over the surface of the deck 6, which serve to establish the dimensions of the panel 1 by interaction with the side edges; more exactly, the sensors 9 are six in number in the example illustrated (the number will depend in practice on the particular measuring requirement), each comprising a microswitch 9a, and a respective feeler 9b by means of which to sense the presence of the panel 1 and thus to gauge the distance of the relative edge from the corresponding reference element 7 or 8.

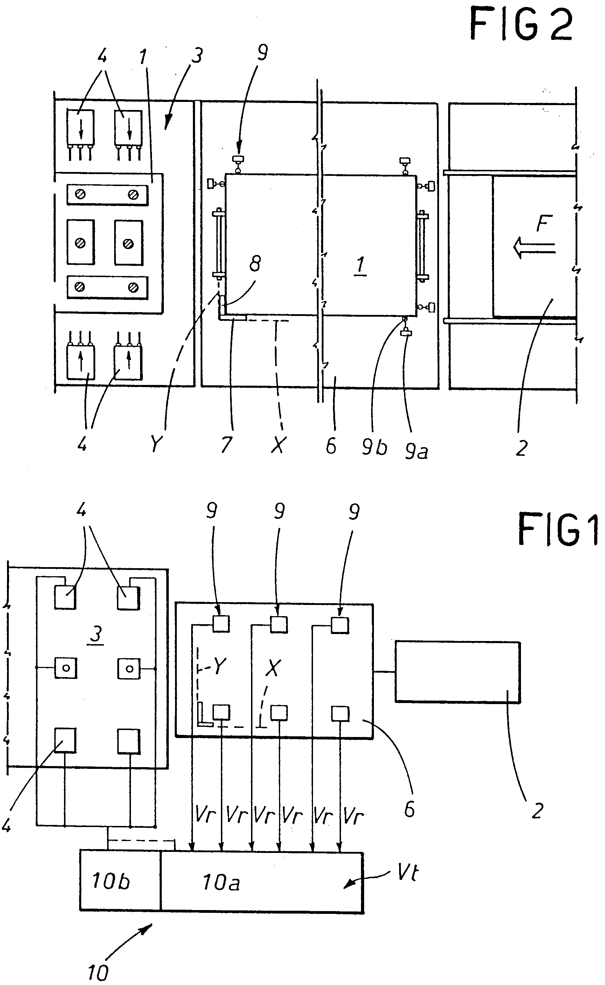

As illustrated in fig 1, each sensor 9 generates an output signal indicative of an effective value Vr, i.e. as measured, which is relayed to a central processing unit 10; the signals Vr supplied thus by the sensors are compared with standard machining reference values Vt already adopted for the batch of panels in process 1 and stored in the unit 10. The outputs of the central processing unit 10 are used to pilot an adjustment of the tool units 4 of the successive work station 3 in response to any difference between the measured values Vr and the selected reference values Vt.

Drawing on prior art, the central comparison and processing unit 10 could comprise a computer 10a, for example a personal computer able to operate with a suitable software package, preferably in conjunction with a conventional numerical control unit 10b, in such a way as to permit of effecting the comparison and processing operations on the effective and reference values Vr and Vt, and thereafter of modifying the positions of the tool units 4 if necessary.

A system of the type disclosed, imported into a woodworking line for the production of panels, will function in the following manner.

Fed forward by the up-line machining or conveying station 2 in the direction of the arrow denoted F, the single panel 1 comes to rest with one corner against the pair of stops 7 and 8 afforded by the table of the intermediate station 5, whereupon a measurement of the panel 1 is effected on all sides by the sensors 9.

The measurement data is relayed to the processing unit 10, and more exactly to the computer 10a, in which the optimum reference positioning values are stored. The computer 10a compares the measured data with the stored information, and in the event that any difference in values is detected, supplies the new corrected values needed to adjust the position of the tool units 4; these are relayed as output signals either directly to the units 4 themselves, or to the numerical control unit 10b which will then pilot the adjustment. During the course of the comparison operations, the measured panel resumes its movement along the feed direction F toward the borer 3 (the table 6 might incorporate a conveyor belt 51 for this same purpose).

With repositioning of the tool units 4 effected, the measured panel 1 is conveyed into the work station 3, another panel 1 enters the intermediate station 5, and the measurement cycle is repeated. Thus, the intermediate station 5 disclosed enables a precise measurement (within minimal dimensional parameters) of single panels 1 in a short interval of time, which can be utilized, with the assistance of the processing unit 10, to achieve a "dedicated" adaptation of the tool heads of a successive work station for each individual panel fed through. With this type of arrangement, it becomes possible for every panel to be machined correctly without interrupting the progress of the production line, and in addition, for the time normally consumed in setting up toolage, and thereafter in effecting fine adjustments, to be totally retrieved.

## Claims

1) A system for measuring, monitoring and comparing the dimensions of panels, suitable in particular for integration into woodworking lines comprising at least one up-line station (2) by which single wood panels (1) are either machined or conveyed, and thereafter, a work station (3) by which holes are bored in the panels, equipped with a plurality of tool units (4) adjustable for position and disposed along the path followed by the panels, characterized

    – in that it comprises an intermediate station (5) following the up-line station (2) and preceding the work station (3), consisting in a deck (6) disposed substantially in the same plane as that of the path through which the panels (1) are conveyed during their progress along the line, and affording a pair of vertical fixed reference elements (7, 8) against which one corner of each successive panel is caused to locate, disposed at right angles one to another and functioning as a datum on cartesian axes (X, Y) for a plurality of contact sensors (9), uniformly distributed over the deck, of which the purpose is to establish the dimensions of the single panel by interaction with the side edges; and

    – in that each sensor (9) generates an output signal indicative of an as-measured, effective value (Vr), which is subjected to a comparison with previously selected standard reference values (Vt) performed by a central processing unit (10) capable also of piloting an adjustment, in the positions of the tool units (4) of the work station (3) in response to a difference between the measured values (Vr) and the reference values (Vt).

2) A system as in claim 1, wherein the sensors (9) are at least six in number, each consisting in a micro switch (9a) and a respective feeler (9b) by means of which to sense the presence of the panel (1) and to gauge the distance of the relative edge from the corresponding reference element (7, 8).

3) A system as in claim 1, wherein the central processing unit (10) comprises a computer unit (10a) and a numerical control unit (10b) serving respectively to compare and process the measured values (Vr) and the reference values (Vt) and to pilot any corresponding adjustment of the tool units (4).

4) A system as in claim 1, wherein the intermediate station (5) consists in a table located between the up-line station (2) and the work station (3), and the fixed reference elements (7, 8) are embodied as a pair of vertical stops positioned to coincide with points of origin to which the operations of the work station (3) are referred.

# FIG 2

# FIG1